# FASCICULE DE BREVET EUROPEEN

(11) **EP 2 882 971 B1**
(45) Date de publication et mention de la délivrance du brevet: **07.09.2016**
(21) Numéro de dépôt: 13745147.2
(22) Date de dépôt: 02.07.2013
(51) Int. Cl.: F16C 1/10, F16C 1/26

(54) **ENSEMBLE DE FIXATION COMPRENANT UN ORGANE SUPPORT ET UN EMBOUT DE GAINE SECURISÉ A RATTRAPAGE DE JEU, NOTAMMENT POUR UNE COMMANDE DE BOITE DE VITESSES D'UN VÉHICULE AUTOMOBILE**
BEFESTIGUNGSANORDNUNG MIT EINEM STÜTZELEMENT UND EINEM ENDSTÜCK MIT FIXIERTER HÜLSE MIT EINER EINSTELLVORRICHTUNG, INSBESONDERE FÜR EINE KRAFTFAHRZEUGSCHALTSTEUERUNG
ATTACHMENT ASSEMBLY INCLUDING A SUPPORTING MEMBER AND A SECURED SLEEVE END-PIECE HAVING AN ADJUSTMENT DEVICE, IN PARTICULAR FOR A MOTOR VEHICLE GEARSHIFT CONTROL

(30) Priorité: 09.08.2012 FR 1257737
(43) Date de publication de la demande: 17.06.2015
(73) Titulaire: Peugeot Citroën Automobiles SA, 78140 Vélizy Villacoublay (FR)
(72) Inventeur: VIVION, Jean, F-92240 Malakoff (FR); ATTRAZIC, Yannick, F-91570 Bievres (FR)
(86) Numéro de dépôt international: PCT/FR2013/051551
(87) Numéro de publication internationale: WO 2014/023881

(56) Documents cités:
- EP-A2- 0 209 249
- WO-A2-2007/056650
- US-A- 5 553 818

## Description

La présente invention concerne un ensemble de fixation comprenant un organe support et un embout de gaine sécurisé à rattrapage de jeu, notamment pour une commande de boîte de vitesses d'un véhicule automobile.

Le document WO 2007/056650 A2 décrit un ensemble de fixation.

### ARRIÈRE-PLAN DE L'INVENTION

On sait que certains équipements automobiles, en particulier la boîte de vitesses, sont commandés par des câbles agissant aussi bien en tirant qu'en poussant. Pour que le câble puisse être manoeuvré avec précision il est nécessaire que l'extrémité de la gaine soit elle-même maintenue avec précision dans une position fixe. À cet effet, l'extrémité des gaines est généralement montée dans un embout de gaine destiné à être introduit latéralement dans un organe support comportant une ouverture en U. Afin de permettre une introduction facile de l'embout de gaine sur l'organe support, le montage initial est réalisé avec un jeu radial et un jeu axial. Pour que la manoeuvre du câble soit précise il est donc nécessaire d'effectuer un rattrapage de jeu axial et un rattrapage de jeu radial.

À cette fin il a été envisagé d'utiliser un dispositif unique de rattrapage de jeu par engagement d'une nervure curviligne portée par un levier de verrouillage monté sur l'embout de gaine, avec une rainure curviligne réalisée dans l'organe support, la nervure curviligne et la rainure curviligne étant configurées pour exercer simultanément une force axiale et une force radiale appropriées pour effectuer un rattrapage de jeu axial et un rattrapage de jeu radial.

Pour des raisons de coût les différents éléments constituant l'ensemble de fixation sont réalisés en matière plastique moulée. La réalisation industrielle d'un ensemble de fixation tel que décrit ci-dessus pose un problème en raison de la difficulté de réaliser par moulage une nervure et une rainure présentant des dimensions précises selon deux directions perpendiculaires.

### OBJET DE L'INVENTION

### Un but de l'invention est de proposer un ensemble de fixation assurant un positionnement précis de l'embout de gaine par rapport à un organe support tout en étant réalisable industriellement.

### BRÈVE DESCRIPTION DE L'INVENTION

En vue de la réalisation de ce but, on propose selon l'invention un ensemble de fixation comportant : un organe support ayant une ouverture en U ; un embout de gaine comportant un corps dans lequel est monté une extrémité d'une gaine entourant un câble ; un levier de verrouillage monté sur le corps pour pivoter par rapport à celui-ci; un premier dispositif de rattrapage de jeu comprenant un élément porté par le levier de verrouillage et configuré pour effectuer un rattrapage de jeu axial, et un second dispositif de rattrapage de jeu comprenant un élément porté par le levier de verrouillage de façon séparée du premier dispositif de rattrapage de jeu et configuré pour effectuer un rattrapage de jeu radial.

Ainsi, en traitant de façon séparée le rattrapage de jeu axial et le rattrapage jeu radial il est possible de réaliser industriellement des pièces présentant une grande précision selon la direction du rattrapage de jeu concerné.

Le second dispositif de rattrapage de jeu est configuré pour assurer un rattrapage de jeu axial, à un degré moindre que le premier dispositif de rattrapage de jeu. Ainsi, dans un fonctionnement normal, le rattrapage de jeu axial du second dispositif de rattrapage de jeu n'interfère pas avec le rattrapage de jeu axial du premier dispositif de rattrapage de jeu, mais en cas de défaillance du premier dispositif de rattrapage de jeu, le second dispositif de rattrapage de jeu assure alors un fonctionnement de l'ensemble de fixation dans un mode de seulement légèrement dégradé.

Par ailleurs, la gaine contenant le câble est généralement équipée de l'embout de gaine avant la livraison à un atelier de montage. Lors des manipulations du câble, il existe un risque que le levier de verrouillage soit accroché et provoque une détérioration d'une partie de l'embout de gaine.

Selon un autre aspect de l'invention, celle-ci concerne un ensemble de fixation comportant un organe support ayant une ouverture en U, et un embout de gaine comportant un corps dans lequel est monté une extrémité d'une gaine entourant un câble, et un levier de verrouillage monté sur le corps pour pivoter par rapport à celui-ci, l'ensemble de fixation pouvant notamment comporter un premier dispositif de rattrapage de jeu comprenant un élément porté par le levier de verrouillage et configuré pour effectuer un rattrapage de jeu axial, et un second dispositif de rattrapage de jeu comprenant un élément porté par le levier de verrouillage de façon séparée du premier dispositif de rattrapage de jeu et configuré pour effectuer un rattrapage de jeu radial, l'ensemble de fixation comportant en outre des moyens de blocage du levier de verrouillage dans une position de livraison, alors que l'embout de verrouillage n'est pas engagé sur l'organe support.

Selon une version avantageuse de cet aspect de l'invention, l'ensemble de fixation comporte des moyens pour débloquer automatiquement le levier de verrouillage de la position de livraison lorsque l'embout de gaine est engagé sur l'organe support. De préférence, les moyens pour débloquer automatiquement le levier de verrouillage de la position de livraison ne sont actifs qu'après que des moyens de retenue axiale et/ou des moyens de retenue radiale aient été activés par l'engagement de l'embout de gaine sur l'organe support. Le déblocage du levier de verrouillage de la position de livraison apparaît alors comme un témoin de la mise en oeuvre effective des moyens de retenue axiale et/ou des moyens de retenue radiale.

En outre, lorsque l'ensemble est en place sur un véhicule il existe un risque que le levier de verrouillage entre en vibration au moins pour certains régimes du moteur, ce qui pourrait entrainer un déverrouillage intempestif du levier de verrouillage. Selon encore un autre aspect de l'invention, celle-ci concerne un ensemble de fixation comportant un organe support ayant une ouverture en U, et un embout de gaine comportant un corps dans lequel est monté une extrémité d'une gaine entourant un câble, et un levier de verrouillage monté sur le corps pour pivoter par rapport à celui-ci, l'ensemble de fixation pouvant notamment comporter un premier dispositif de rattrapage de jeu comprenant un élément porté par le levier de verrouillage et configuré pour effectuer un rattrapage de jeu axial, et un second dispositif de rattrapage de jeu comprenant un élément porté par le levier de verrouillage de façon séparée du premier dispositif de rattrapage de jeu et configuré pour effectuer un rattrapage de jeu radial, l'ensemble de fixation comportant en outre des moyens pour amortir des vibrations du levier de verrouillage de l'embout de gaine lorsque l'embout de gaine est verrouillé sur l'organe support en position de rattrapage de jeu.

Selon une version avantageuse de cet aspect de l'invention, les moyens pour amortir des vibrations du levier de verrouillage de l'embout de gaine dans la position de rattrapage de jeu sont combinés avec des moyens de reprise d'effort en cas de dépassement d'un seuil d'effort sur les moyens pour amortir des vibrations du levier de verrouillage.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- la figure 1 est une vue En perspective éclatée de l'ensemble de fixations selon l'invention,
- la figure 2 est une vue en perspective de l'organe support vu de l'arrière,
- la figure 3 est une vue en perspective du levier de verrouillage seul, dans une position intermédiaire entre la position de livraison et la position de rattrapage de jeu,
- la figure 4 est une vue en perspective du corps principal équipé du levier de verrouillage dans la position de livraison avec un écorché partiel au niveau des moyens de blocage du levier de verrouillage,
- la figure 5 est une vue en perspective de l'arrière de l'ensemble de fixation selon l'invention en position verrouillée sur l'organe support,
- la figure 6 est une vue de côté de l'ensemble de fixation dans la même position que la figure 5 avec un écorché partiel de l'organe support et un écorché partiel de la languette d'amortissement de vibrations et de la nervure d'amortissement de vibrations,
- la figure 7 est une vue selon l'encadré VII de la figure 6, l'écorché étant cette fois au niveau d'une languette de reprise d'effort, et d'une nervure de reprise d'effort.

### DESCRIPTION DETAILLÉE DE L'INVENTION

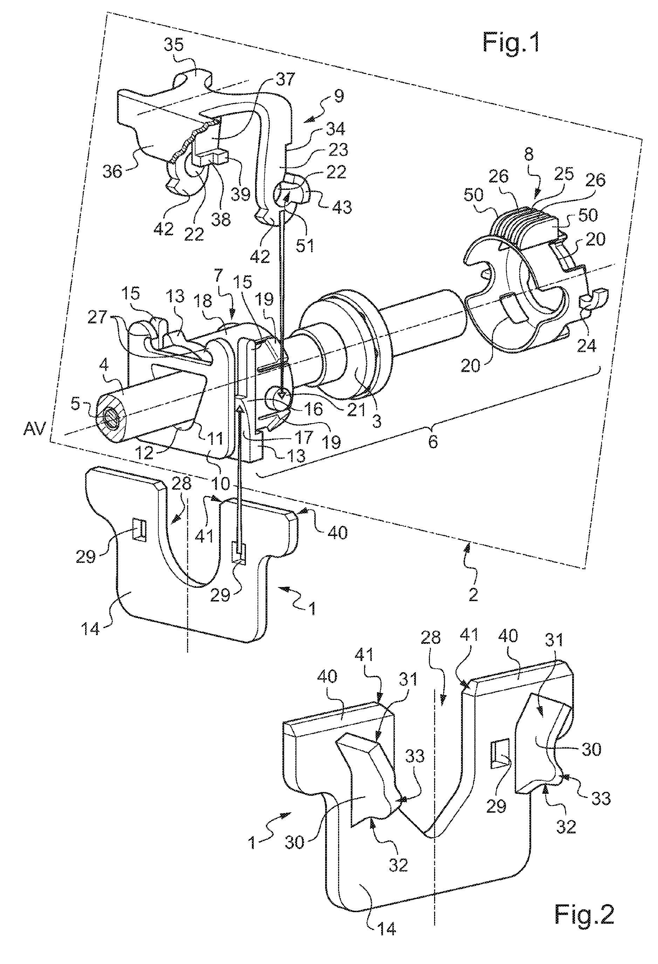

Sur la figure 1, l'avant de l'ensemble de fixation selon l'invention a été déterminé de façon arbitraire et est mentionné par des lettres AV.

En référence aux figures, l'ensemble de fixation selon l'invention comporte un organe support 1 et un embout de gaine 2 servant à verrouiller une extrémité 3 d'une gaine 4 entourant un câble de manoeuvre 5.

L'embout de gaine 2 comporte un corps 6 comprenant une partie de corps principale 7 sur laquelle est monté un couvercle 8, et un levier de verrouillage 9.

Les différents composants de l'ensemble de fixation sont tous symétriques par rapport à un plan vertical passant par l'axe de la gaine 4.

Le corps principal 7 comporte une plaque d'appui 10 s'étendant perpendiculairement à la direction axiale de la gaine 4 et percée d'une ouverture en U fermé 11 dans laquelle s'étend la gaine 4. La plaque d'appui 10 est rigidement reliée, par une cloison annulaire 12 entourant l'ouverture 11, à une plaque de retenue 13 qui s'étend parallèlement à la plaque d'appui 10, en arrière de celle-ci et à une distance légèrement supérieure à l'épaisseur d'une plaque support 14 de l'organe support 1 qui s'étend perpendiculairement à une direction axiale de la gaine.

Des bras de rattrapage de jeu 15 sont reliés de façon élastique à la plaque de retenue 13, par exemple en les réalisant en une seule pièce avec la plaque de retenue 13, avec une fente de séparation s'étendant sur la majeure partie de la hauteur de la plaque de retenue 13 et débouchant sur le bord supérieur de la plaque de retenue 13. Les bras de rattrapage de jeu 15 s'étendent en regard de la plaque d'appui, de chaque côté de celle-ci. Chaque bras de rattrapage de jeu 15 comporte une dent de retenue 16 en saillie vers la plaque d'appui 10 et comportant une rampe inclinée 17 tournée vers le bas.

En arrière de la plaque de retenue 13 et en une seule pièce avec celle-ci, le corps principal 7 comporte un compartiment cylindrique 18 ayant des dimensions adaptées pour former avec le couvercle 8 un compartiment recevant sans jeu l'extrémité de gaine 3. À son extrémité arrière, la partie cylindrique 18 comporte des clips 19 qui coopèrent avec le bord avant d'ouvertures 20 du couvercle 8 pour maintenir le couvercle 8 en place.

De chaque côté de la partie cylindrique 18, le corps principal comporte des tétons de pivotement 21 dimensionnés et disposés pour permettre un pivotement du levier de verrouillage 9 en engageant sur les tétons 21, des trous 22 réalisés dans des joues 23 du levier de verrouillage 9.

Le couvercle 8 comporte des butées 24 s'étendant radialement et limitant la course du levier de verrouillage dans le sens de rattrapage de jeu. À sa partie supérieure le couvercle 8 comporte une languette élastique d'amortissement de vibrations 25 encadrée par deux languettes élastiques de reprise d'effort 26 dont la structure détaillée sera décrite ci-après.

À sa partie supérieure la plaque d'appui 10 comporte des crochets de blocage 27 tournés l'un vers l'autre.

La plaque support 14 de l'organe support 1 comporte une ouverture centrale 28 en U ayant des dimensions très légèrement supérieures aux dimensions externes de la paroi de liaison 12, de façon à assurer un guidage du corps de gaine 6 lorsque celui-ci est engagé sur l'organe support. L'organe support 1 comporte des trous de retenue radiale 29 dont le côté supérieur coïncide avec le côté supérieur des dents de retenue radiale 16 lorsque la paroi de jonction 12 du corps 6 est en butée dans le fond de l'ouverture en U 28.

Sur sa face arrière, la plaque support 14 comporte au moins une, ici deux ailettes 30 rigidement portées par la plaque support 14 pour s'étendre perpendiculairement à celle-ci dans une direction opposée à la plaque d'appui 10. Les ailettes 30 comportent à leur partie supérieure des surfaces de guidage 31 légèrement inclinées pour permettre une introduction aisée du corps 6 sur la plaque support 14 lors du montage de la de gaine sur un véhicule. À la partie inférieure, les ailettes 30 comportent chacune un bord curviligne convexe comprenant un tronçon de bord de rattrapage de jeu radial 32 s'étendant en dessous de l'ailette 30, et un tronçon de bord de rattrapage axial 33 s'étendant sur un côté de l'ailette opposé à la plaque d'appui 10.

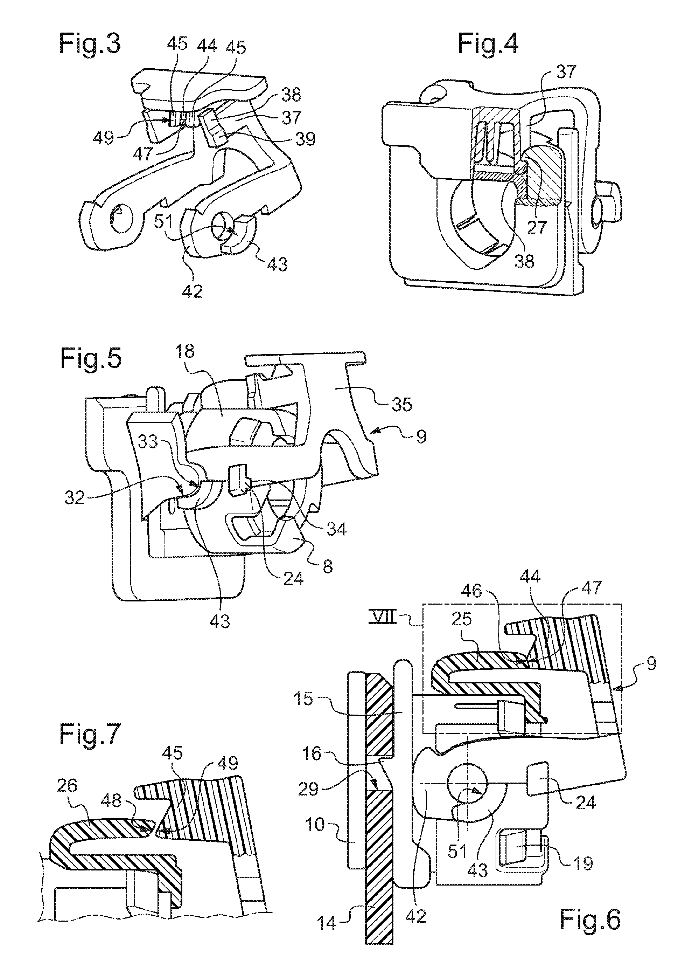

Le levier de verrouillage 9 a généralement une forme de U tournée dans le bas. Ainsi qu'il a été indiqué ci-dessus, le levier de verrouillage 9 comporte des joues 23 percées de trous 22 venant s'engager sur les tétons de pivotement 21 du corps 6. Le bord arrière de chaque joue 23 comporte une encoche 34 qui vient s'engager sur la butée 24 du couvercle 8 lorsque le levier de verrouillage 9 est basculé en position de rattrapage de jeu afin de réaliser une sécurité d'assemblage du couvercle 8 avec le corps principal 7. Les joues 23 sont réunies par une partie de liaison 35 s'étendant perpendiculairement aux joues et équipée d'une poignée 36. Des languettes élastiques 37 sont fixées à la partie de liaison 35 pour s'étendre entre les joues 23, en direction des axes de pivotement 21. A leur extrémité libre les languettes 37 portent chacune une dent de blocage de levier 38 disposée pour venir se clipser sur l'un des crochets de blocage 27 de la plaque d'appui 10 lorsque le levier de verrouillage est basculé vers l'avant en position de livraison comme illustré par la figure 4. Chaque languette élastique 37 comporte également une rampe 39 de déblocage de levier qui, lorsque le levier de verrouillage est dans une position de livraison, s'étend en regard de l'espace compris entre la plaque d'appui 10 et la plaque de retenue 13.

À sa partie supérieure, la plaque support 14 comporte deux rampes 40 d'escamotage des dents de retenue, qui sont tournées vers l'arrière et viennent en regard des rampes 17 des dents de retenue 16 lorsque le corps 6 est engagé sur la plaque support 14. En outre, de part et d'autre de l'ouverture 28, la plaque support 14 comporte deux rampes 41 tournées l'une vers l'autre, et réalisées à l'extrémité de la plaque support 14 par laquelle commence l'engagement de l'embout de gaine sur l'organe support, afin d'assurer un déblocage du levier de verrouillage à partir de la position de livraison comme cela sera analysé plus en détail ci-après.

Chaque joue 23 comporte à sa partie inférieure une première came 42 de rattrapage de jeu. La première came 42 s'étend en saillie par rapport au bord de la joue dans le plan de la joue. Chaque joue 23 comporte également à sa partie inférieure une seconde came de rattrapage de jeu 43 qui s'étend latéralement en saillie de la joue 23 et comporte une face concave 51 disposée pour venir prendre appui simultanément sur le tronçon de bord de rattrapage radial 32, et sur le tronçon de bord de rattrapage axial 33 de l'ailette 30 correspondante lors d'un pivotement du levier de verrouillage dans un sens de rattrapage de jeu, c'est-à-dire vers l'arrière dans le mode de réalisation illustré.

Par ailleurs, comme cela est visible sur la figure 3, la figure 6, et la figure 7, le levier de verrouillage comporte une nervure d'amortissement de vibrations 44 qui vient en regard de la languette d'amortissement de vibrations 25 du couvercle 8 lors d'un pivotement du levier de verrouillage vers la position de rattrapage de jeu. De part et d'autre de la nervure d'amortissement de vibrations 44, le levier de verrouillage comporte des nervures de reprise effort 45 qui viennent en regard des languettes de reprise d'effort 26 du couvercle 8 lors du pivotement du levier de verrouillage vers la position de rattrapage de jeu.

Pour l'installation de l'ensemble de fixation selon l'invention, l'organe support 1 est fixé de façon connue en soi par des moyens non représentés sur l'équipement à commander ou à proximité de celui-ci, par exemple sur le carter d'une boîte de vitesses d'un véhicule automobile. Par ailleurs, en atelier, la gaine 4 équipée de l'extrémité de gaine 3 et du câble 5 est mise en place dans le corps 6 en refermant la partie de corps principal 7 au moyen du couvercle 8. Le levier de verrouillage 9 est monté sur les tétons de pivotement 21 et le levier de verrouillage 9 est basculé vers l'avant jusqu'à enclenchement des dents de blocage 38 sous les crochets de blocage 27 de la plaque d'appui 10. L'embout de gaine est alors en position de livraison illustrée par la figure 4.

Sur le site de montage, l'embout de gaine 2 est mis en place sur l'organe support 1 en engageant la plaque d'appui 10 et la plaque de retenue 13 de part et d'autre de la plaque support 14 et en faisant descendre l'embout de gaine 2. La plaque support 14 remonte ainsi entre la plaque d'appui 10 et la plaque de retenue 13. Lorsque les rampes 40 d'escamotage des dents de retenue atteignent les rampes 17 des dents de retenue 16, les dents de retenue s'escamotent jusqu'à ce qu'elles soient en coïncidence avec les trous de retenue radiale 29 de la plaque support 14 dans lesquels elles s'engagent. Un peu avant que les dents de retenue 16 soient engagées dans les trous de retenue 29, les rampes 41 de déblocage du levier de verrouillage atteignent les rampes 39 portées par les languettes 37 de sorte que les dents de blocage 38 sont repoussées pour les dégager des crochets de blocage 27. On notera ce propos que les rampes 39 ont une épaisseur supérieure aux dents de blocage 38 afin de s'assurer que des dents de blocage 38 sont bien dégagées des crochets de blocage 27 lorsque les dents de retenue 16 atteignent les trous de retenue 29.

Dans cette position l'embout de gaine 2 est retenu sur l'organe support 1 tant axialement par un encastrement de la plaque support 14 entre la plaque d'appui 10 et la plaque de retenue 13, que radialement par les dents de retenue 16 en saillie du côté de la plaque support.

Le levier de verrouillage 9 est alors rabattu vers l'arrière jusqu'à ce que la nervure d'amortissement de vibrations 44 fasse fléchir la languette d'amortissement de vibrations 25 et passe au-delà de celle-ci, et que les nervures de reprise d'efforts 45 fassent fléchir les languettes de reprise d'efforts 26 et passent au-delà de celles-ci, puis le levier de verrouillage est relâché. La nervure d'amortissement de vibrations 44 et la languette d'amortissement de vibrations 25 sont configurés pour que les surfaces d'appui en regard respectivement 47 et 46, soient alors en appui élastique et soient inclinées vers l'avant pour permettre un mouvement réversible du levier de verrouillage au-delà d'un seuil d'effort sur le levier de verrouillage dans le sens inverse au sens de rattrapage de jeu. Au contraire, les nervures de reprise d'effort 45 et les languettes de reprise d'effort 26 ont des surfaces d'appui, respectivement 49 et 48, qui sont inclinées vers l'arrière pour réaliser un appui irréversible des surfaces de reprise d'effort. Pour éviter un conflit entre les appuis d'amortissement de vibrations et les appuis de reprise d'effort, les surfaces d'appui de reprise d'effort 48 et 49 sont espacées l'une de l'autre lorsque les surfaces d'amortissement de vibrations 44 et 46 sont en contact comme illustré par les figures 6 et 7. Les surfaces d'appui de reprise d'effort 48 et 49 sont maintenues espacées les unes des autres tant que le seuil d'effort n'est pas atteint.

Le levier de verrouillage 9 est alors dans une position normale de rattrapage de jeu illustrée par les figures 5 et 6. Dans cette position, les cames de rattrapage de jeu axial 42 sont en appui sur les bras de rattrapage de jeu axial 15 de sorte que la face arrière de la plaque d'appui 10 est plaquée contre la face avant de la plaque support 14 qui est prise en sandwich entre la plaque d'appui 10 et les bras de rattrapage de jeu axial 15. La plaque d'appui 10, la plaque de retenue 13, la cloison annulaire 12, les bras de rattrapage de jeu 15, et les cames de rattrapage de jeu axial 42, constituent ainsi un premier dispositif de rattrapage de jeu réalisant un rattrapage de jeu axial. Ce premier dispositif de rattrapage de jeu comporte : une plaque d'appui 10 portée par le corps et s'étendant d'un côté de l'organe support lui-même en forme de plaque support 14 s'étendant perpendiculairement à une direction axiale de la gaine , une plaque de retenue 13 s'étendant d'un côté de l'organe support opposé à la plaque d'appui et reliée rigidement à celle-ci, au moins un bras de rattrapage de jeu 15 relié de façon élastique à la plaque de retenue et s'étendant en regard de l'organe support, et une première came de rattrapage de jeu 42 portée par le levier de verrouillage en regard de chaque bras de rattrapage de jeu et disposée pour prendre appui sur le bras de rattrapage de jeu correspondant lors d'un pivotement du levier de verrouillage dans un sens de rattrapage de jeu.

Simultanément, chaque seconde came 43 prend appui sur le tronçon de bord de rattrapage radial 32 et sur le tronçon de bord de rattrapage axial 33 de l'ailette 30 correspondante. La plaque d'appui 10, les ailettes 30, et les cames concaves 43, constituent ainsi un second dispositif de rattrapage de jeu configuré pour effectuer un rattrapage radial et axial.

Pour éviter un conflit entre le rattrapage de jeu axial résultant de l'appui de la came 42 sur le bras de rattrapage de jeu axial 15 correspondant, et le rattrapage de jeu axial résultant de l'appui de la came 43 sur le tronçon de bord de rattrapage axial 33 de l'ailette 30 correspondante, la came 43 et le tronçon de bord 33, sont configurés pour assurer un rattrapage de jeu axial à un degré moindre que le rattrapage de jeu axial réalisé par le premier dispositif de rattrapage de jeu, c'est-à-dire que pour une position donnée du levier de verrouillage, la force de rattrapage de jeu axial exercée par le second dispositif de rattrapage de jeu est inférieure à la force de rattrapage de jeu axial exercée par le premier dispositif de rattrapage de jeu .

Si le premier dispositif de rattrapage de jeu devient défaillant, le rattrapage de jeu axial est assuré par le second dispositif de rattrapage de jeu.

Par ailleurs, si la force d'appui de la nervure d'amortissement de vibrations 44 sur la languette d'amortissement de vibrations 26 dépasse un seuil prédéterminé, la nervure 44 pousse la languette 25 vers le bas et le levier de verrouillage 9 pivote vers l'avant jusqu'à ce que les surfaces de reprise d'effort 48 et 49 soient en contact. Dans cette position l'ensemble de fixation selon l'invention fonctionne en mode légèrement dégradé ce qui permet néanmoins de poursuivre l'usage de l'équipement concerné.

Pour éviter un déverrouillage intempestif, les languettes 25 et 26 sont de préférence protégées contre un écrasement accidentel en prévoyant des cloisons rigides 50 encadrant les languettes 25 et 26.

Pour démonter l'ensemble de fixation selon l'invention, une pression vers le bas est exercée sur les languettes de reprise d'efforts 26 pour escamoter celles-ci en dessous des nervures de reprise d'effort 45, le levier de verrouillage 9 est basculé vers l'avant, et une pression est exercée vers l'arrière sur les bras de rattrapage de jeu axial 15 de sorte qu'il est alors possible de soulever l'embout de gaine 2 pour le dégager de la plaque support 14.

Bien entendu l'invention n'est pas limitée au mode de réalisation décrit et on peut y apporter des variantes de réalisation sans sortir du cadre de l'invention telle que définie par les revendications.

En particulier, bien que le premier dispositif de rattrapage de jeu décrit n'exerce qu'un rattrapage de jeu axial, on peut prévoir un premier dispositif de rattrapage de jeu exerçant également un rattrapage de jeu radial. Dans ce cas, pour éviter un conflit entre les rattrapages de jeu radiaux, le premier dispositif de rattrapage de jeu sera configuré pour que le rattrapage de jeu radial résultant du premier dispositif de rattrapage de jeu soit de degré moindre que le rattrapage de jeu radial résultant du second dispositif de rattrapage de jeu.

## Revendications

1. Ensemble de fixation comportant : un organe support (1) ayant une ouverture (28) en U ; un embout de gaine (2) comportant un corps (6) dans lequel est monté une extrémité (3) d'une gaine(4) entourant un câble (5), et un levier de verrouillage (9) monté sur le corps pour pivoter par rapport à celui-ci, un premier dispositif de rattrapage de jeu (10,12,13,15,42) comprenant un élément (42) porté par le levier de verrouillage et configuré pour effectuer un rattrapage de jeu axial, et un second dispositif de rattrapage de jeu (10,12,30,43) comprenant un élément (43) porté par le levier de verrouillage de façon séparée du premier dispositif de rattrapage de jeu et configuré pour effectuer un rattrapage de jeu radial, le second dispositif de rattrapage de jeu étant configuré pour assurer un rattrapage de jeu axial, à un degré moindre que le premier dispositif de rattrapage de jeu, ledit ensemble de fixation étant **caractérisé en ce que** le second dispositif de rattrapage de jeu comporte : une plaque d'appui (10) portée par le corps et s'étendant d'un côté de l'organe support lui-même en forme de plaque support (14) s'étendant perpendiculairement à une direction axiale de la gaine; au moins une ailette (30) rigidement portée par la plaque support, s'étendant perpendiculairement à celle-ci dans une direction opposée à la plaque d'appui (10), et comportant un bord curviligne convexe comprenant un tronçon de bord de rattrapage radial (32) s'étendant en dessous de l'ailette, et un tronçon de bord de rattrapage axial (33) s'étendant à l'opposé de la plaque d'appui (10); et, pour chaque ailette, une seconde came (43), portée par le levier de verrouillage et ayant une face concave (51) disposée pour venir prendre appui simultanément sur le tronçon de bord de rattrapage radial (32), et sur le tronçon de bord de rattrapage axial (33) lors d'un pivotement du levier de verrouillage dans un sens de rattrapage de jeu.

2. Ensemble de fixation selon la revendication 1, **caractérisé en ce que** le premier dispositif de rattrapage de jeu comporte : une plaque d'appui (10) portée par le corps et s'étendant d'un côté de l'organe support lui-même en forme de plaque support (14) s'étendant perpendiculairement à une direction axiale de la gaine , une plaque de retenue (13) s'étendant d'un côté de l'organe support opposé à la plaque d'appui et reliée rigidement à celle-ci, au moins un bras de rattrapage de jeu (15) relié de façon élastique à la plaque de retenue et s'étendant en regard de l'organe support, et une première came de rattrapage de jeu (42) portée par le levier de verrouillage en regard de chaque bras de rattrapage de jeu et disposée pour prendre appui sur le bras de rattrapage de jeu correspondant lors d'un pivotement du levier de verrouillage dans un sens de rattrapage de jeu.

3. Ensemble de fixation selon la revendication 2, **caractérisé en ce que** la première came de rattrapage de jeu et la seconde came de rattrapage de jeu sont portées par une joue du levier de verrouillage, la première came de rattrapage de jeu (42) s'étendant en saillie par rapport à un bord de la joue, dans le plan de la joue tandis que la seconde came de rattrapage de jeu (43) s'étend latéralement en saillie de la joue.

4. Ensemble de fixation selon la revendication 1, **caractérisé en ce que** le premier dispositif de rattrapage de jeu comporte des moyens (16,29) pour assurer une retenue radiale de l'embout de gaine sur l'organe support.

5. Ensemble de fixation selon la revendication 2 et la revendication 4, **caractérisé en ce que** chaque bras de rattrapage de jeu (15) comporte une dent de retenue radiale (16), en saillie du côté de la plaque support, disposée pour s'engager dans un trou de retenue radiale (29) réalisé dans la plaque support.

6. Ensemble de fixation selon la revendication 5, **caractérisé en ce que** chaque dent de retenue radiale (16) comporte une rampe (17) coopérant avec une rampe correspondante (40) de la plaque support pour écarter la dent de retenue radiale de façon élastique jusqu'à ce la dent de retenue radiale atteigne le trou de retenue radiale lors de la mise en place de l'embout de gaine sur la plaque support.

7. Ensemble de fixation selon la revendication 1, **caractérisé en ce qu'**il comporte des moyens de blocage (27,38) du levier de verrouillage dans une position de livraison, alors que l'embout de verrouillage n'est pas engagé sur l'organe support.

8. Ensemble de fixation selon la revendication 7, **caractérisé en ce que** les moyens de blocage du levier de verrouillage dans une position de livraison comprennent au moins une dent de blocage de levier (38) portée par une languette élastique (37) fixée au levier de verrouillage, la dent de blocage de levier étant disposée pour venir se clipser sur un crochet (27) porté par le corps, lorsque le levier de verrouillage est rabattu dans la position de livraison.

## Patentansprüche

1. Befestigungsanordnung, die Folgendes umfasst: ein Stützelement (1), das eine U-förmige Öffnung (28), einen Hülsenansatz (2), der einen Körper (6) umfasst, in den ein Ende (3) einer Hülse (4), die ein Kabel (5) umgibt, montiert ist, und einen Verriegelungshebel (9), der auf den Körper montiert ist, um in Bezug zu diesem zu schwenken, eine erste Spielnachstellvorrichtung (10, 12, 13, 15, 42), die ein Element (42) umfasst, das von dem Verriegelungshebel getragen wird und ausgelegt ist, um ein Nachstellen von axialem Spiel auszuführen, und eine zweite Spielnachstellvorrichtung (10, 12, 30, 43), die ein Element (43) umfasst, das von dem Verriegelungshebel auf von der ersten Spielnachstellvorrichtung getrennte Art getragen wird und ausgelegt ist, um ein Nachstellen von radialem Spiel auszuführen, hat, wobei die zweite Spielnachstellvorrichtung ausgelegt ist, um ein Nachstellen von axialem Spiel in einem geringeren Ausmaß als die erste Spielnachstellvorrichtung sicherzustellen, Befestigungseinheit **dadurch gekennzeichnet, dass** die zweite Spielnachstellvorrichtung Folgendes umfasst: eine Auflageplatte (10), die von dem Körper getragen wird und sich auf einer Seite des Stützelements erstreckt, das selbst eine Stützplattenform (14) hat, die sich senkrecht zu einer axialen Richtung der Hülse erstreckt, wobei sich mindestens eine Rippe (30), die starr von der Stützplatte getragen wird, senkrecht zu dieser in eine Richtung entgegengesetzt zu der Auflageplatte (10) erstreckt und einen konvex gebogenen Rand umfasst, der einen radialen Nachstellrandabschnitt (32) umfasst, der sich unterhalb der Rippe erstreckt, und einen axialen Nachstellrandabschnitt (33), der sich der Auflageplatte (10) entgegengesetzt erstreckt, und für jede Rippe einen zweiten Nocken (43), der von dem Verriegelungshebel getragen wird, und eine konkave Seite (51) hat, die angeordnet ist, um gleichzeitig auf dem radialen Nachstellrandabschnitt (32) und auf dem axialen Nachstellrandabschnitt (33) bei einem Schwenken des Verriegelungshebels in eine Spielnachstellvorrichtung zum Aufliegen zu kommen.

2. Befestigungsanordnung nach Anspruch 1, **dadurch gekennzeichnet, dass** die erste Spielnachstellvorrichtung Folgendes umfasst: eine Auflageplatte (10), die von dem Körper getragen wird und sich auf einer Seite des Stützelements erstreckt, das selbst eine Form einer Tragplatte (14) hat, die sich senkrecht zu einer axialen Richtung der Hülse erstreckt, eine Rückhalteplatte (13), die sich auf einer Seite des Stützelements, die der Auflageplatte entgegengesetzt und mit dieser starr verbunden ist, erstreckt, mindestens einen Spielnachstellarm (15), der elastisch mit der Rückhalteplatte verbunden ist und sich gegenüber dem Stützelement erstreckt, und einen ersten Spielnachstellnocken (42), der von dem Verriegelungshebel gegenüber jedem Spielnachstellarm getragen wird und angeordnet ist, um auf dem entsprechenden Spielnachstellarm bei einem Schwenken des Verriegelungshebels in eine Spielnachstellrichtung aufzuliegen.

3. Befestigungsanordnung nach Anspruch 2, **dadurch gekennzeichnet, dass** der erste Spielnachstellnocken und der zweite Spielnachstellnocken von einer Backe des Verriegelungshebels getragen werden, wobei sich der erste Spielnachstellnocken (42) in Bezug zu einem Rand der Backe vorstehend in der Ebene der Backe erstreckt, während sich der zweite Spielnachstellnocken (43) seitlich von der Backe vorstehend erstreckt.

4. Befestigungsanordnung nach Anspruch 1, **dadurch gekennzeichnet, dass** die erste Spielnachstellvorrichtung Mittel (16, 29) umfasst, um ein radiales Zurückhalten des Hülsenansatzes auf dem Stützelement sicherzustellen.

5. Befestigungsanordnung nach Anspruch 2 und Anspruch 4, **dadurch gekennzeichnet, dass** jeder Spielnachstellarm (15) einen radialen Rückhaltezahn (16) umfasst, der auf der Seite der Tragplatte vorsteht, der angeordnet ist, um sich in eine radiale Rückhaltebohrung (29), die in der Tragplatte hergestellt ist, einzufügen.

6. Befestigungsanordnung nach Anspruch 5, **dadurch gekennzeichnet, dass** jeder radiale Rückhaltezahn (16) eine Rampe (17) umfasst, die mit einer entsprechenden Rampe (40) der Tragplatte zusammenwirkt, um den radialen Rückhaltezahn elastisch abzuspreizen, bis der radiale Rückhaltezahn die radiale Rückhaltebohrung beim Anbringen des Hülsenansatzes auf der Tragplatte erreicht.

7. Befestigungsanordnung nach Anspruch 1, **dadurch gekennzeichnet, dass** sie Mittel (27, 38) zum Blockieren des Verriegelungshebels in einer Lieferposition umfasst, während der Verriegelungsansatz nicht auf dem Stützelement eingerückt ist.

8. Befestigungsanordnung nach Anspruch 7, **dadurch gekennzeichnet, dass** die Mittel zum Blockieren des Verriegelungshebels in einer Lieferposition mindestens einen Hebelblockierungszahn (38) umfassen, der von einer elastischen Lasche (37), die an dem Verriegelungshebel befestigt ist, getragen wird, wobei der Hebelblockierungszahn angeordnet ist, um sich auf einen Haken (27) zu clipsen, der von dem Körper getragen wird, wenn der Verriegelungshebel in die Lieferposition heruntergeklappt wird.

## Claims

1. An attachment assembly comprising: a supporting member (1) having a U-shaped opening (28); a sleeve end-piece (2) comprising a body (6) in which one end (3) of a sleeve (4) surrounding a cable (5) is mounted, and a locking lever (9) mounted on the body so as to pivot relative thereto, a first adjustment device (10, 12, 13, 15, 42) comprising an element (42) supported by the locking lever and configured to make an axial adjustment, and a second adjustment device (10, 12, 30, 43) comprising an element (43) supported by the locking lever separately from the first adjustment device and configured to make a radial adjustment, the second adjustment device being configured to carry out an axial adjustment, to a lesser extent than the first adjustment device, said attachment assembly being **characterized in that** the second adjustment device comprises: a support plate (10) supported by the body and extending on one side of the supporting member itself in the form of a support plate (14) extending perpendicularly to an axial direction of the of the sleeve; at least one wing (30) rigidly supported by the support plate, extending perpendicularly thereto in an opposite direction to the support plate (10), and comprising a convex curvilinear edge including a radial adjustment edge section (32) extending beneath the wing, and an axial adjustment edge section (33) extending opposite the support plate (10); and, for each wing, a second cam (43), supported by the locking lever and having a concave face (51) disposed to come to rest simultaneously on the radial adjustment edge section (32), and on the axial adjustment edge section (33) during a pivoting of the locking lever in an adjustment direction.

2. The attachment assembly according to Claim 1, **characterized in that** the first adjustment device comprises: a support plate (10) supported by the body and extending on one side of the supporting member itself in the form of a support plate (14) extending perpendicularly to an axial direction of the sleeve, a retention plate (13) extending on one side of the supporting member opposed to the support plate and rigidly connected thereto, at least one adjustment arm (15) connected in an elastic manner to the retention plate and extending opposite the supporting member, and a first adjustment cam (42) supported by the locking lever opposite each adjustment arm and disposed to rest on the corresponding adjustment arm during a pivoting of the locking lever in an adjustment direction.

3. The attachment assembly according to Claim 2, **characterized in that** the first adjustment cam and the second adjustment cam are supported by a cheek of the locking lever, the first adjustment cam (42) extending in a projecting manner with respect to an edge of the cheek, in the plane of the cheek, whilst the second adjustment cam (43) extends laterally in a projecting manner from the cheek.

4. The attachment assembly according to Claim 1, **characterized in that** the first adjustment device comprises means (16, 29) to ensure a radial retention of the sleeve end-piece on the supporting member.

5. The attachment assembly according to Claim 2 and Claim 4, **characterized in that** each adjustment arm (15) comprises a radial retention tooth (16), projecting from the side of the support plate, disposed to engage in a radial retention hole (29) formed in the support plate.

6. The attachment assembly according to Claim 5, **characterized in that** each radial retention tooth (16) comprises a ramp (17) cooperating with a corresponding ramp (40) of the support plate to separate the radial retention tooth in an elastic manner until the radial retention tooth reaches the radial retention hole during the putting in place of the sleeve end-piece on the support plate.

7. The attachment assembly according to Claim 1, **characterized in that** it comprises blocking means (27, 38) of the locking lever in a delivery position, while the locking end-piece is not engaged on the supporting member.

8. The attachment assembly according to Claim 7, **characterized in that** the blocking means of the locking lever in a delivery position include at least one lever blocking tooth (38) supported by an elastic tab (37) fixed to the locking lever, the lever blocking tooth being disposed to come to be clipped on a hook (27) supported by the body, when the locking lever is brought back in the delivery position.
